# EUROPÄISCHE PATENTSCHRIFT

(11) **EP 0 774 382 B1**
(45) Veröffentlichungstag und Bekanntmachung des Hinweises auf die Patenterteilung: **23.02.2000**
(21) Anmeldenummer: 96117681.5
(22) Anmeldetag: 05.11.1996
(51) Int. Cl.: B60R 13/04, B60R 13/02

(54) **Zier- oder Schutzleiste sowie Verfahren zur Herstellung einer derartigen Leiste**
Decorative or protective trim strip and process for making the same
Moulure de protection ou décorative et procédé pour sa fabrication

(30) Priorität: 15.11.1995 DE 19542537
(43) Veröffentlichungstag der Anmeldung: 21.05.1997
(73) Patentinhaber: MAGNA EXTERIOR SYSTEMS GmbH, 63179 Obertshausen (DE)
(72) Erfinder: Rosenbecker, Martin, 36396 Steinau (DE); Palige, Dieter, 63773 Goldbach (DE)
(74) Vertreter: Kovac, Werner

(56) Entgegenhaltungen:
- DE-A- 2 842 207
- DE-U- 8 619 256
- FR-A- 2 679 845

## Beschreibung

Die Erfindung betrifft eine Zier- oder Schutzleiste, welche mittels mindestens eines Klebebandes an einer Fahrzeugkarosserie befestigbar ist, gemäß den Merkmalen des Oberbegriffs des Anspruchs 1 bzw. 5. Die Erfindung bezieht sich außerdem auf ein Verfahren zur Herstellung einer derartigen Leiste.

Die Seitenflächen von Kraftfahrzeugkarosserien werden häufig mit Zier- oder Schutzleisten aus Kunststoff oder Metall versehen, um die Karosserie u.a. gegenüber äußeren Schlag- oder Stoßeinwirkungen zu schützen. Die Befestigung der jeweiligen Schutzleiste kann mit Hilfe von Klipsen, Schrauben oder durch eine Klebeverbindung erfolgen. Als besonders vorteilhaft hat es sich erwiesen, wenn die jeweilige Schutzleiste bereits von dem Zulieferer mit einem an der Schutzleiste haftenden Klebeband versehen ist, dessen der Karosserie zugewandte Seite ebenfalls eine Klebeschicht (doppelseitiges Klebeband) aufweist, die mit einem streifenförmigen Abdeckband (im folgenden auch als Liner bezeichnet) versehen ist. Der Hersteller des Kraftfahrzeuges kann dann die Zier- oder Schutzleiste auf einfache Weise an der jeweiligen Karosserie befestigen, indem er den Liner von der Klebeschicht des Klebebandes abzieht und die Schutzleiste gegen den entsprechenden Bereich der Karosserie drückt.

Aus der DE-U-8619256 ist ein Verkleidungselement für Kraftfahrzeug-Karosserien bekannt, welches an seiner Innenseite mit einem auflaminierten Klebefilm und mit einer Abdeckfolie versehen ist, und welches eine mit der Abdeckfolie verklebte Abziehlasche aufweist. Das freie Ende der Abziehlasche ist dort für Transport- und Lagerzwecke um eine Kante des Verkleidungselements herum gegen dessen Sichtseite umgeschlagen.

Ein besonderer Nachteil der vorstehend beschriebenen bekannten Schutzleisten besteht darin, daß die Herstellung derartiger Leisten relativ aufwendig ist. Da die Schutzleisten in der Regel vor der Auslieferung an den Kraftfahrzeughersteller lakkiert werden müssen, können die Abziehhilfen erst nach dem Lakkierprozeß aufgebracht werden. Anderenfalls würde sich an den überstehenden griffseitigen Enden der Abziehhilfe ein Lackpfropfen bilden, der beim Abziehen des Liners zu einer ausgefransten Farbkante führt. Da außerdem der mit Lack verunreinigte Liner eine geringe Haftung aufweist, muß der mit der Abziehhilfe zu überklebende Linerbereich vor dem Lackieren, z.B. durch ein Kreppband, geschützt werden, welches dann nach dem Lackieren wieder entfernt wird, um anschließend die Abziehlasche aufzubringen.

Der Erfindung liegt die Aufgabe zugrunde, eine Zier- oder Schutzleiste anzugeben, die auf einfache und kostengünstige Weise herstellbar ist, und bei der insbesondere das zusätzliche Abkleben mit einem Kreppband entfallen kann. Ferner soll ein Verfahren zur Herstellung derartiger Leisten angegeben werden.

Diese Aufgabe wird erfindungsgemäß hinsichtlich der Zier- oder Schutzleiste durch die Merkmale des kennzeichnenden Teils des Anspruchs 1 bzw. 5 und hinsichtlich des Verfahrens durch die Merkmale des kennzeichnenden Teils des Anspruchs 6 gelöst. Weitere besonders vorteilhafte Ausgestaltungen der Erfindung offenbaren die Unteransprüche.

Die Erfindung beruht im wesentlichen auf dem Gedanken, daß·die Abziehhilfe im Schnitt eine etwa U-förmige Gestalt aufweist, wobei sich der Wendepunkt im Bereich des schutzleistenseitigen Endes des Klebebandes befindet. Der eine Schenkel der Abziehhilfe, der dem Befestigungsteil entspricht, ist also - wie bei bekannten Schutzleisten auch - an dem Liner des Klebebandes befestigt, während der zweite Schenkel der Abziehhilfe, der der Lasche entspricht, flach auf dem ersten Schenkel aufliegt und vorzugsweise durch einen schwach haftenden Kleber in dieser Stellung gehalten wird.

Eine derartige Anordnung der Abziehhilfe weist den Vorteil auf, daß das Lackieren der jeweiligen Schutzleiste bei bereits an dem Liner befestigter Abziehhilfe erfolgen kann.

Soll die erfindungsgemäße Schutzleiste bei dem Kraftfahrzeughersteller an einer Karosserie befestigt werden, wird die Lasche der Abziehhilfe zunächst leicht nach oben gezogen, so daß die Haftung zwischen diesem Ende und dem ersten Schenkel aufgehoben ist. Anschließend wird dann in an sich bekannter Weise die Lasche in Richtung des Liners gezogen und dieser dadurch entfernt.

Sofern die Schutzleiste mit Hilfe mehrerer Liner an einer Fahrzeugkarosserie befestigt werden soll, hat es sich als vorteilhaft erwiesen, wenn das Befestigungsteil der Abziehhilfe die einzelnen Liner miteinander verbindet, so daß die Liner mit Hilfe nur einer Abziehhilfe abgezogen werden können. Besonders in den Fällen, in denen die Schutzleisten sowohl sich in Längsrichtung der Leiste erstreckende (Längs-)Liner als auch an den Schutzleistenenden angeordnete Querliner aufweisen, haben sich derartige die einzelnen Liner verbindende Abziehhilfen bewährt.

Die Abziehhilfe kann sowohl einteilig als auch zweiteilig ausgebildet sein. Bei einer zweiteiligen Ausgestaltung werden zweckmäßigerweise die Lasche und das Befestigungsteil an ihren im Bereich des dem längsseitigen Ende der Zier- oder Schutzleiste zugewandten Endes des Abdeckbandes angeordneten Enden miteinander verbunden, wobei die Lasche mindestens teilweise auf dem Befestigungsteil der Abziehhilfe aufliegt, und wobei die Haftkraft der Verbindung zwischen der Lasche und dem Befestigungsteil größer ist als die Haftkraft der Verbindung zwischen dem Befestigungsteil und dem entsprechenden Abdeckband des Klebebandes.

Weitere Einzelheiten und Vorteile der Erfindung ergeben sich aus den folgenden anhand von Figuren erläuterten Ausführungsbeispielen. Es zeigen:
- Fig. 1: einen Querschnitt eines ersten Ausführungsbeispieles einer erfindungsgemäßen Zier- oder Schutzleiste mit einem Längsliner und einer einteiligen Abziehhilfe;
- Fig. 2: einen Querschnitt eines zweiten Ausführungsbeispieles einer Zier- oder Schutzleiste mit Längs- und Querliner sowie einer einteiligen Abziehhilfe;
- Fig. 3: eine Draufsicht auf das in Fig.2 dargestellte Ausführungsbeispiel und
- Fig.4: einen Querschnitt eines dritten Ausführungsbeispieles einer erfindungsgemäßen Zier- oder Schutzleiste mit Längs- und Querliner sowie einer zweiteiligen Abziehhilfe.

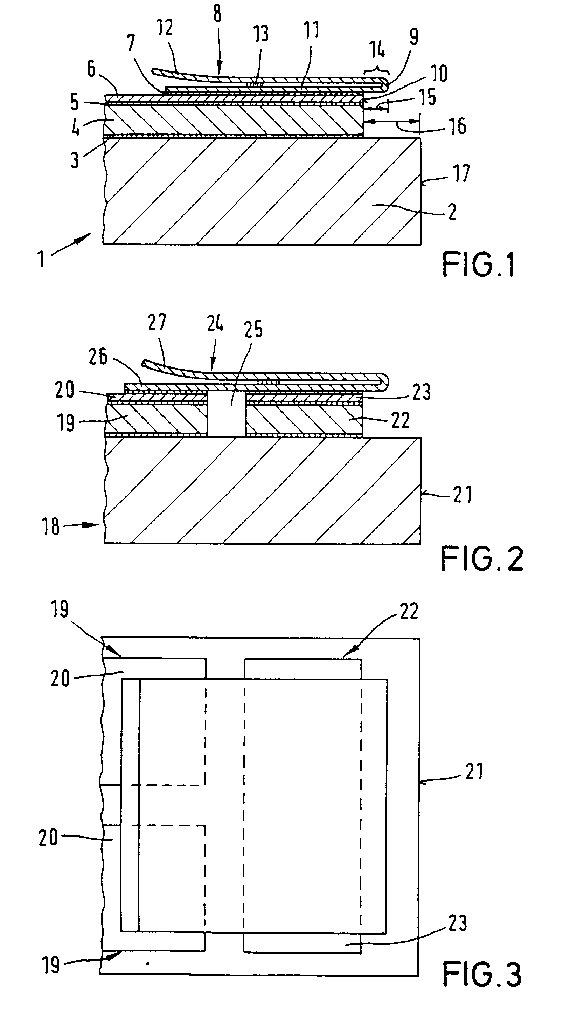

In der Fig.1 ist mit 1 eine erfindungsgemäße Schutzleiste bezeichnet, welche im wesentlichen aus einer Kunststoff- oder Metalleiste 2 und einem über eine Klebeschicht 3 an der Kunststoffleiste 2 befestigten Klebeband 4 besteht. An dem Klebeband 4 ist mit Hilfe einer weiteren Klebeschicht 5 ein Liner 6 befestigt, an dem über eine entsprechende Klebeschicht 7 eine Abziehhilfe 8 angeordnet ist.

Die Abziehhilfe 8 ist etwa U-förmig gefaltet, wobei der Wendepunkt 9 im Bereich des Endes 10 des Liners 6 liegt und die Abziehhilfe 8 in diesem Bereich zur Unterstützung des Faltvorganges perforiert ist. Die Abziehhilfe 8 besteht aus einem Befestigungsteil 11, welches über die Klebeschicht 7 an dem Liner 6 befestigt ist, und einer Lasche 12, die mittels einer Klebeschicht 13 an dem Befestigungsteil 11 angeklebt ist. Die Haftung dieser Klebeschicht 13 ist relativ gering, so daß beim Ziehen der Lasche 12 sich dieser Schenkel wieder leicht von dem Befestigungsteil 11 trennen läßt. Außerdem ist die Klebeschicht 13 derart angeordnet, daß eine die Montage durchführende Person das Ende der Lasche 12 mit der Hand greifen kann, ohne daß dabei die Klebeschicht stört, so daß ein Hochziehen der Lasche 12 zum Abziehen des Liners 6 problemlos möglich ist.

Um außerdem zu vermeiden, daß bei dem Lackierungsvorgang der Schutzleiste 1 der über das Klebeband 4 hervorstehende Bereich 14 der Abziehhilfe 8 stört, sollte der Wendepunkt 9 der Abziehhilfe 8 einen Abstand 15 von dem Ende 10 des Liners 6 aufweisen, der kleiner ist, als der Abstand 16 zwischen dem Ende 10 des Liners 6 und dem längsseitigen Ende 17 der Schutzleiste 1. Insbesondere kann der Abstand 15 auch den Wert Null annehmen, so daß der Wendepunkt 9 der Abziehhilfe bündig mit dem Ende des Liners 6 abschließt.

Die Fig.2 und 3 zeigen ein weiteres Ausführungsbeispiel der Erfindung, bei dem die mit 18 bezeichnete Schutzleiste mit zwei in Längsrichtung der Leiste sich erstreckenden Klebebändern 19, mit Längslinern 20 und einem am längsseitigen Ende 21 der Schutzleiste 18 angeordneten Abschlußklebeband 22 mit Querliner 23 versehen ist (Fig.3).

Ferner sind zwei einteilige Abziehhilfen 24 vorgesehen, die im wesentlichen dem Aufbau der in Fig.1 dargestellten Abziehhilfe 8 entsprechen. Allerdings verbinden die beiden Abziehhilfen 24 den jeweiligen endseitigen Bereich der Längsliner 20 mit dem Querliner 23, so daß der Zwischenraum 25 zwischen den Längslinern 20 und dem Querliner 23 durch das Befestigungsteil 26 der entsprechenden Abziehhilfe 24 überbrückt ist und sich Quer- und Längsliner sehr schnell durch Ziehen an den Laschen 27 der beiden Abziehhilfen 24 entfernen lassen.

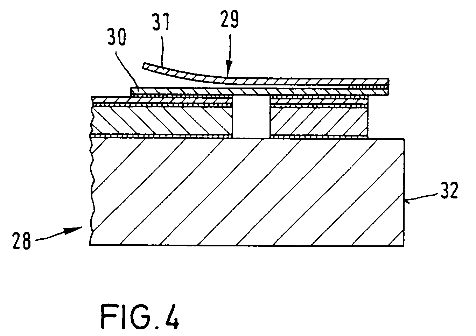

Die vorliegende Erfindung ist selbstverständlich nicht auf die vorstehend beschriebenen Ausführungsbeispiele beschränkt. So zeigt Fig.4 eine Schutzleiste 28, deren Aufbau zwar im wesentlichen dem Aufbau der in Fig.2 dargestellten Leiste 18 entspricht, bei der aber eine Abziehhilfe 29 vorgesehen ist, die zweiteilig ausgebildet ist. Die Abziehhilfe 29 besteht aus einem Befestigungsteil 30 und einer Lasche 31, deren dem längsseitigen Ende 32 der Schutzleiste 28 zugewandte Enden fest miteinander verbunden sind. Dabei ist wesentlich, daß die Haftkraft der Verbindung zwischen Lasche 31 und Befestigungsteil 30 größer ist als zwischen der Verbindung zwischen dem Befestigungsteil 30 und dem darunter befindlichen Abdeckband des Klebebandes. Auf eine zusätzliche Klebeschicht, wie sie in Fig.1 mit dem Bezugszeichen 13 gekennzeichnet ist, wurde bei diesem Ausführungsbeispiel aus Übersichtlichkeitsgründen verzichtet.

Schließlich ist es auch nicht zwingend erforderlich, daß der Wendepunkt der Abziehhilfe zwischen dem Ende des Abdeckbandes und dem längsseitigen Ende der Zier- oder Schutzleiste liegt. Vielmehr kann der Wendepunkt auch genau mit dem Ende des Abdeckbandes abschließen oder auch im Bereich des Abdeckbandes liegen (in Fig.1 würde der Wendepunkt 9 dann nach links verschoben auf dem Abdeckband 6 liegen).

### Bezugszeichenliste

- 1: Zier- oder Schutzleiste
- 2: Kunststoffleiste
- 3: Klebeschicht
- 4: Klebeband
- 5: Klebeschicht
- 6: Liner, Längsliner, Abdeckband
- 7: Klebeschicht
- 8: Abziehhilfe
- 9: Wendepunkt
- 10: Ende des Liners 6
- 11: Befestigungsteil
- 12: Lasche
- 13: Klebeschicht, Haftschicht
- 14: Bereich
- 15: Abstand
- 16: Abstand
- 17: längsseitiges Ende der Zier- oder Schutzleiste

- 18: Zier- oder Schutzleiste
- 19: Klebeband
- 20: Längsliner, Abdeckband
- 21: längsseitiges Ende der Zier- oder Schutzleiste
- 22: Abschlußklebeband
- 23: Querliner, Abdeckband
- 24: Abziehhilfe
- 25: Zwischenraum
- 26: Befestigungsteil
- 27: Lasche
- 28: Zier- oder Schutzleiste
- 29: Abziehhilfe
- 30: Befestigungsteil
- 31: Lasche
- 32: längsseitiges Ende der Zier- oder Schutzleiste 28

## Patentansprüche

1. Zier- oder Schutzleiste, die mindestens ein Klebeband (4;19) aufweist, mit welchem die Leiste an einer Fahrzeugkarosserie befestigbar ist, wobei auf der an der Karosserie zu befestigenden Seite des Klebebandes (4;19) die entsprechende Klebeschicht (5) mit einem streifenförmigen Abdeckband (6;20,23) abgedeckt ist, und wobei mindestens im Bereich eines Endes (10) des Abdeckbandes (6;20;23) eine mit einer Lasche (12;27;31) und einem Befestigungsteil (11;26;30) versehene Abziehhilfe (8;24;29) vorgesehen ist, deren Befestigungsteil (11;26;30) mit der Oberfläche des Abdeckbandes (6;20,23) verbunden ist, und wobei die Abziehhilfe (8;24;29) U-förmig gefaltet ist, wobei der Wendepunkt (9) im Bereich des dem längsseitigen Ende der Zier- oder Schutzleiste (1) zugewandten Endes (10) des Abdeckbandes (6;20,23) angeordnet ist, **dadurch gekennzeichnet,** daß die Lasche (12;27;31) mindestens teilweise auf dem Befestigungsteil (11;26;30) der Abziehhilfe (8;24;29) aufliegt.

2. Zier- oder Schutzleiste nach Anspruch 1, **dadurch gekennzeichnet**, daß der Wendepunkt (9) der Abziehhilfe (8;24) einen Abstand (15) von dem Ende (10) des Abdeckbandes (6;20,23) aufweist, der kleiner ist als der Abstand (16) zwischen dem Ende (10) des Abdeckbandes (6;20,23) und dem längsseitigen Ende (17;21) der Zier- oder Schutzleiste (1;18).

3. Zier- oder Schutzleiste nach Anspruch 1 oder 2, **dadurch gekennzeichnet**, daß die Abziehhilfe (8;24) einteilig ausgebildet ist, und daß die Lasche (12;27) auf dem Befestigungsteil (11;26) der Abziehhilfe (8;24) mittels einer Haftschicht (13) befestigt ist, wobei die Haftung dieser Haftschicht (13) geringer ist als die Haftung der Klebeschicht (7) zwischen Abdeckband (6;20,23) und Abziehhilfe (8;24).

4. Zier- oder Schutzleiste nach einem der Ansprüche 1 bis 3, **dadurch gekennzeichnet**, daß bei einer Leiste (18;28) mit mehreren Abdeckbändern (20,23) das Befestigungsteil (26;30) der Abziehhilfe (24;29) den Zwischenraum (25) zwischen benachbarten Abdeckbändern (20;23) überbrückt, und daß der Wendepunkt (9) der Abziehhilfe (24;29) sich im Bereich des Endes des dem längsseitigen Ende (17;21) der Zier- oder Schutzleiste (18;28) benachbarten Abdeckbandes (20,23) befindet.

5. Zier- oder Schutzleiste, die mindestens ein Klebeband (4;19) aufweist, mit welchem die Leiste an einer Fahrzeugkarosserie befestigbar ist, wobei auf der an der Karosserie zu befestigenden Seite des Klebebandes (4;19) die entsprechende Klebeschicht (5) mit einem streifenförmigen Abdeckband.(6;20,23) abgedeckt ist, und wobei mindestens im Bereich eines Endes (10) des Abdeckbandes (6;20;23) eine mit einer Lasche (12;27;31) und einem Befestigungsteil (11;26;30) versehene Abziehhilfe (8;24;29) vorgesehen ist, deren Befestigungsteil (11;26;30) mit der Oberfläche des Abdeckbandes (6;20,23) verbunden ist, **dadurch gekennzeichnet**, daß die Abziehhilfe (29) zweiteilig ausgebildet ist, derart, daß die Lasche (31) und das Befestigungsteil (30) an ihren im Bereich des dem längsseitigen Ende der Zier- oder Schutzleiste (28) zugewandten Endes (10) des Abdeckbandes (6;20,23) angeordneten Enden miteinander verbunden sind und die Lasche (31) mindestens teilweise auf dem Befestigungsteil (30) der Abziehhilfe (29) aufliegt, wobei die Haftkraft der Verbindung zwischen der Lasche (31) und dem Befestigungsteil (30) größer ist als die Haftkraft der Verbindung zwischen dem Befestigungsteil (30) und dem entsprechenden Abdeckband des Klebebandes.

6. Verfahren zur Herstellung einer Zier- oder Schutzleiste nach Anspruch 1, die mindestens ein Klebeband (4;19) aufweist, mit welchem die Leiste an einer Fahrzeugkarosserie befestigbar ist, und die nach dem Anbringen des Klebebandes lackiert wird, wobei auf der mit der Karosserie zu befestigenden Seite des Klebebandes (4;19) die entsprechende Klebeschicht (5) mit einem streifenförmigen Abdeckband (6;20,23) abgedeckt wird, und wobei mindestens im Bereich eines Endes (10) des Abdeckbandes (6;20;23) eine mit einer Lasche (12;27;31)und einem Befestigungsteil (11;26;30) versehene Abziehhilfe (8;24;29) befestigt wird, **dadurch gekennzeichnet,** daß eine U-förmig gefaltete Abziehhilfe (8;24;29) vor dem Lackieren der Zier- oder Schutzleiste (1;18;28) auf dem Abdeckband (6;20,23) befestigt wird, und daß der Wendepunkt (9) der Abziehhilfe (8;24;29) dabei derart angeordnet wird, daß er sich im Bereich des dem längsseitigen Ende der Zier- oder Schutzleiste (1) zugewandten Endes (10) des Abdeckbandes (6;20,23) befindet.

7. Verfahren nach Anspruch 6, **dadurch gekennzeichnet,** daß die Lasche (12;27) der Abziehhilfe (8;24) auf deren Befestigungsteil (11;26) mittels einer Haftschicht (13) befestigt wird, wobei die Haftung dieser Haftschicht (13) geringer gewählt wird als die Haftung der Klebeschicht (7) zwischen Abdeckband (6;20,23) und Abziehhilfe (8;24).

8. Verfahren nach Anspruch 6 oder 7, **dadurch gekennzeichnet**, daß zur Herstellung einer Zier- oder Schutzleiste (18) mit mehreren Abdeckbändern (20,23) das Befestigungsteil (26) der Abziehhilfe (24) mit benachbarten Abdeckbändern (20,23) verbunden wird, wobei der Wendepunkt (9) der Abziehhilfe (24) derart angeordnet wird, daß er sich im Bereich des Endes des dem längsseitigen Ende (21) der Zier- oder Schutzleiste (18) benachbarten Abdeckbandes (20,23) befindet.

## Claims

1. Decorative or protective strip comprising at least one adhesive tape (4; 19), by which the strip is fastenable to a vehicle body, wherein at the side of the adhesive tape (4; 19) to be fastened to the body the corresponding adhesive layer (5) is covered by a strip-shaped cover band (6; 20, 23), and wherein provided at least in the region of one end (10) of the cover band (6; 20, 23) is a peel-off aid (8; 24; 29), which is provided with a tab (12; 27; 31) and a fastening part (11; 26; 30), which fastening part (11; 26; 30) is joined to the surface of the cover band (6; 20, 23), and wherein the peel-off aid (8; 24; 29) is folded into a U-shape, wherein the turning point (9) is disposed in the region of the end (10) of the cover band (6; 20, 23) directed towards the longitudinal-side end of the decorative or protective strip (1), **characterized** in that the tab (12; 27; 31) lies at least partially on the fastening part (11; 26; 30) of the peel-off aid (8; 24; 29).

2. Decorative or protective strip according to claim 1, **characterized** in that the turning point (9) of the peel-off aid (8; 24) is at a distance (15) from the end (10) of the cover band (6; 20, 23) which is smaller than the distance (16) between the end (10) of the cover band (6; 20, 23) and the longitudinal-side end (17; 21) of the decorative or protective strip (1; 18).

3. Decorative or protective strip according to claim 1 or 2, **characterized** in that the peel-off aid (8; 24) is of a one-piece construction, and that the tab (12; 27) is fastened on the fastening part (11; 26) of the peel-off aid (8; 24) by means of a bonding layer (13), wherein the adhesive strength of said bonding layer (13) is lower than the adhesive strength of the adhesive layer (7) between cover band (6; 20, 23) and peel-off aid (8; 24).

4. Decorative or protective strip according to one of claims 1 to 3, **characterized** in that, given a strip (18; 28) having a plurality of cover bands (20, 23), the fastening part (26; 30) of the peel-off aid (24; 29) bridges the gap (25) between adjacent cover bands (20; 23), and that the turning point (9) of the peel-off aid (24; 29) is situated in the region of the end of the cover band (20, 23) adjacent to the longitudinal-side end (17; 21) of the decorative or protective strip (18; 28).

5. Decorative or protective strip comprising at least one adhesive tape (4; 19), by which the strip is fastenable to a vehicle body, wherein at the side of the adhesive tape (4; 19) to be fastened to the body the corresponding adhesive layer (5) is covered by a strip-shaped cover band (6; 20, 23), and wherein provided at least in the region of one end (10) of the cover band (6; 20, 23) is a peel-off aid (8; 24; 29), which is provided with a tab (12; 27; 31) and a fastening part (11; 26; 30), which fastening part (11; 26; 30) is joined to the surface of the cover band (6; 20, 23), **characterized** in that the peel-off aid (29) is of a two-piece construction such that the tab (31) and the fastening part (30) are joined to one another at their ends, which are disposed in the region of the end (10) of the cover band (6; 20, 23) directed towards the longitudinal-side end of the decorative or protective strip (28), and the tab (31) lies at least partially on the fastening part (30) of the peel-off aid (29), wherein the adhesive strength of the join between the tab (31) and the fastening part (30) is greater than the adhesive strength of the join between the fastening part (30) and the corresponding cover band of the adhesive tape.

6. Method of manufacturing a decorative or protective strip according to claim 1 which comprises at least one adhesive tape (4; 19), by which the strip is fastenable to a vehicle body, and which is lacquered after the adhesive tape has been affixed, wherein at the side of the adhesive tape (4; 19) to be fastened to the body the corresponding adhesive layer (5) is covered by a strip-shaped cover band (6; 20, 23), and wherein at least in the region of one end (10) of the cover band (6; 20, 23) a peel-off aid (8; 24; 29) provided with a tab (12; 27; 31) and a fastening part (11; 26; 30) is fastened, **characterized** in that prior to lacquering of the decorative or protective strip (1; 18; 28) a peel-off aid (8; 24; 29) folded into a U-shape is fastened on the cover band (6; 20, 23), and that the turning point (9) of the peel-off aid (8; 24; 29) is in said case disposed in such a way that it is situated in the region of the end (10) of the cover band (6; 20, 23) directed towards the longitudinal-side end of the decorative or protective strip (1).

7. Method according to claim 6, **characterized** in that the tab (12; 27) of the peel-off aid (8; 24) is fastened on the latter's fastening part (11; 26) by means of a bonding layer (13), wherein the adhesive strength of said bonding layer (13) is selected so as to be lower than the adhesive strength of the adhesive layer (7) between cover band (6; 20, 23) and peel-off aid (8; 24).

8. Method according to claim 6 or 7, **characterized** in that, for the manufacture of a decorative or protective strip (18) having a plurality of cover bands (20, 23), the fastening part (26) of the peel-off aid (24) is connected to adjacent cover bands (20, 23), wherein the turning point (9) of the peel-off aid (24) is disposed in such a way that it is situated in the region of the end of the cover band (20, 23) adjacent to the longitudinal-side end (21) of the decorative or protective strip (18).

## Revendications

1. Moulure de protection ou décorative, qui présente au moins une bande adhésive (4 ; 19) par laquelle la moulure peut être fixée sur une carrosserie de véhicule, la couche de colle (5) correspondante, sur le côté de la bande adhésive (4 ; 19) à fixer sur la carrosserie, étant recouverte par une bande de recouvrement (6 ; 20, 23) en forme de ruban, et un moyen (8 ; 24 ; 29) d'aide à l'enlèvement, doté d'une languette (12 ; 27 ; 31) et d'une partie de fixation (11 ; 26 ; 30), étant prévu au moins dans la région d'une extrémité (10) de la bande de recouvrement (6 ; 20, 23), moyen dont la partie de fixation (11 ; 26 ; 30) est assemblée à la surface de la bande de recouvrement (6 ; 20, 23), et le moyen (8 ; 24 ; 29) d'aide à l'enlèvement étant replié en forme de U, le point de retournement (9) étant disposé dans la région de l'extrémité (10) de la bande de recouvrement (6 ; 20, 23) qui est tournée vers l'extrémité longitudinale de la moulure de protection ou décorative (1), **caractérisée** en ce que la languette (12 ; 27 ; 31) repose au moins partiellement sur la partie de fixation (11 ; 26 ; 30) du moyen (8 ; 24 ; 29) d'aide à l'enlèvement.

2. Moulure de protection ou décorative selon la revendication 1, **caractérisée** en ce que le point de retournement (9) du moyen (8 ; 24) d'aide à l'enlèvement présente une distance (15) de l'extrémité (10) de la bande de recouvrement (6 ; 20, 23) qui est inférieure à la distance (16) entre l'extrémité (10) de la bande de recouvrement (6 ; 20, 23) et l'extrémité longitudinale (17 ; 21) de la moulure de protection ou décorative (1 ; 18).

3. Moulure de protection ou décorative selon la revendication 1 ou 2, **caractérisée** en ce que le moyen (8 ; 24) d'aide à l'enlèvement est réalisé d'un seul tenant, et en ce que la languette (12 ; 27) est fixée sur la partie de fixation (11 ; 26) du moyen (8 ; 24) d'aide à l'enlèvement au moyen d'une couche adhésive (13), l'adhérence de cette couche adhésive (13) étant inférieure à l'adhérence de la couche de colle (7) entre la bande de recouvrement (6 ; 20, 23) et le moyen (8 ; 24) d'aide à l'enlèvement.

4. Moulure de protection ou décorative selon une des revendications 1 à 3, **caractérisée** en ce que, pour une moulure (18 ; 28) avec plusieurs bandes de recouvrement (20, 23), la partie de fixation (26 ; 30) du moyen (24 ; 29) d'aide à l'enlèvement surmonte l'espace intermédiaire (25) entre deux bandes de recouvrement (20, 23) voisines, et en ce que le point de retournement (9) du moyen (24 ; 29) d'aide à l'enlèvement se trouve dans la région de l'extrémité de la bande de recouvrement (20, 23) voisine de l'extrémité longitudinale (17 ; 21) de la moulure de protection ou décorative (18 ; 28).

5. Moulure de protection ou décorative, qui présente au moins une bande adhésive (4 ; 19) par laquelle la moulure peut être fixée sur une carrosserie de véhicule, la couche de colle (5) correspondante, sur le côté de la bande adhésive (4 ; 19) à fixer sur la carrosserie, étant recouverte par une bande de recouvrement (6 ; 20, 23) en forme de ruban, et un moyen (8 ; 24 ; 29) d'aide à l'enlèvement, doté d'une languette (12 ; 27 ; 31) et d'une partie de fixation (11 ; 26 ; 30), étant prévu au moins dans la région d'une extrémité (10) de la bande de recouvrement (6 ; 20, 23), moyen dont la partie de fixation (11 ; 26 ; 30) est assemblée à la surface de la bande de recouvrement (6 ; 20, 23), **caractérisée** en ce que le moyen (29) d'aide à l'enlèvement est réalisé en deux parties, de telle sorte que la languette (31) et la partie de fixation (30) sont mutuellement assemblées à leurs extrémités disposées dans la région de l'extrémité (10) de la bande de recouvrement (6 ; 20, 23) qui est tournée vers l'extrémité longitudinale de la moulure de protection ou décorative (28), et que la languette (31) repose au moins partiellement sur la partie de fixation (30) du moyen (29) d'aide à l'enlèvement, la force d'adhérence de l'assemblage entre la languette (31) et la partie de fixation (30) étant supérieure à la force d'adhérence de l'assemblage entre la partie de fixation (30) et la bande de recouvrement correspondante de la bande adhésive.

6. Procédé de fabrication d'une moulure de protection ou décorative selon la revendication 1, qui présente au moins une bande adhésive (4 ; 19) par laquelle la moulure peut être fixée sur une carrosserie de véhicule, et qui est peinte après la mise en place de la bande adhésive, la couche de colle (5) correspondante, sur le côté de la bande adhésive (4 ; 19) à fixer sur la carrosserie, étant recouverte par une bande de recouvrement (6 ; 20, 23) en forme de ruban, et un moyen (8 ; 24 ; 29) d'aide à l'enlèvement, doté d'une languette (12 ; 27 ; 31) et d'une partie de fixation (11 ; 26 ; 30), étant fixé au moins dans la région d'une extrémité (10) de la bande de recouvrement (6 ; 20, 23), **caractérisé** en ce qu'un moyen (8 ; 24 ; 29) d'aide à l'enlèvement replié en forme de U est fixé sur la bande de recouvrement (6 ; 20, 23) avant la peinture de la moulure de protection ou décorative (1 ; 18 ; 28), et en ce que le point de retournement (9) du moyen (8 ; 24 ; 29) d'aide à l'enlèvement est disposé de telle sorte qu'il se trouve dans la région de l'extrémité (10) de la bande de recouvrement (6 ; 20, 23) qui est tournée vers l'extrémité longitudinale de la moulure de protection ou décorative (1).

7. Procédé selon la revendication 6, **caractérisé** en ce que la languette (12 ; 27) du moyen (8 ; 24) d'aide à l'enlèvement est fixée sur la partie de fixation (11 ; 26) de ce dernier au moyen d'une couche adhésive (13), l'adhérence de cette couche adhésive (13) étant choisie inférieure à l'adhérence de la couche de colle (7) entre la bande de recouvrement (6 ; 20, 23) et le moyen (8 ; 24) d'aide à l'enlèvement.

8. Procédé selon la revendication 6 ou 7, **caractérisé** en ce que, pour la fabrication d'une moulure de protection ou décorative (18) avec plusieurs bandes de recouvrement (20, 23), la partie de fixation (26) du moyen (24) d'aide à l'enlèvement est assemblée à des bandes de recouvrement (20, 23) voisines, le point de retournement (9) du moyen (24) d'aide à l'enlèvement étant disposé de telle sorte qu'il se trouve dans la région de l'extrémité de la bande de recouvrement (20, 23) voisine de l'extrémité longitudinale (21) de la moulure de protection ou décorative (18).
